# EUROPÄISCHE PATENTSCHRIFT

(11) **EP 2 383 135 B1**
(45) Veröffentlichungstag und Bekanntmachung des Hinweises auf die Patenterteilung: **16.10.2013**
(21) Anmeldenummer: 11003309.9
(22) Anmeldetag: 20.04.2011
(51) Int. Cl.: B60J 7/20

(54) **Bewegbare Abdeckung**
Movable cover
Couvercle mobile

(30) Priorität: 30.04.2010 DE 102010018924
(43) Veröffentlichungstag der Anmeldung: 02.11.2011
(73) Patentinhaber: Magna Car Top Systems GmbH, 74321 Bietigheim-Bissingen (DE)
(72) Erfinder: Kober, Tobias, 71254 Ditzingen (DE); Reichel, Johannes, 71254 Ditzingen (DE); Hesse, Jan, 74321 Bietigheim-Bissingen (DE)
(74) Vertreter: Rausch, Gabriele

(56) Entgegenhaltungen:
- DE-A1- 10 140 233
- DE-A1- 10 327 160
- DE-A1- 19 714 105

## Beschreibung

Die vorliegende Erfindung betrifft eine bewegbare Abdeckung eines Fahrzeugs, insbesondere eines Cabriolet-Fahrzeugs, mit den Merkmalen des Oberbegriffs des Anspruchs 1. Eine solche Abdeckung ist aus DE 10140233 A1 bekannt.

Bewegbare Abdeckungen werden von einer Geschlossenstellung in eine Offenstellung bewegt, wobei die von der Abdeckung freigegebene Öffnung beispielsweise zum Durchtritt von schwenkbaren Lenkern, Stangen, Hebeln oder sonstiges verwendet wird. Auch ist es möglich, dass diese bewegbaren Abdeckungen ganze Fahrzeugbereiche überdecken, wie beispielsweise bei einem Kofferraumdeckel. Die Bewegbarkeit eines Kofferraumdeckels ist dahin gehend ausgerichtet, dass eine einfache und sichere Beladung beziehungsweise Entladung ermöglicht wird.

Bei bewegbaren Abdeckungen, die einen Durchtrittsbereich für Lenker beispielsweise eines zu öffnenden beziehungsweise zu schließenden Verdecks freigeben, müssen die Abdeckungen in eine diese Bewegung freigebende Position geschwenkt werden. Hierbei können die Abdeckungen einfache Schwenkbewegungen oder überlagerte Schwenk- und Linearbewegungen durchführen. Auch ist es bekannt, dass derartige Abdeckungen beispielsweise unter andere Abdeckungen geklappt oder geschwenkt werden. Dies ist häufig dann der Fall, wenn ein Verdeck in einem heckseitigen Aufnahmeraum eines Cabriolet-Fahrzeugs abgelegt wird und die Abdeckung, in diesem Fall ein Verdeckkastendeckel, eine besonders große Durchtrittsöffnung verschließen soll.

Für überlagerte Bewegungen derartiger Abdeckungen sind teilweise sehr aufwändige und komplizierte Gestänge sowie Antriebe notwendig. Die Antriebe können beispielsweise durch Bowdenzüge, hydraulische oder pneumatische Antriebe, sowie durch Elektroantriebe abgebildet werden. Weiter ist es auch möglich, dass die Abdeckungen über mechanische Verbindungselemente wie beispielsweise einem Dachgetriebe, bestehend aus mehreren Lenkern und Hebeln, zwangsgesteuert wird.

Eine Kombination aus mechanisch zwangsgesteuerten Bewegungen, sowie separaten Antriebselementen ist häufig bei Verdeckkastendeckeln von Cabrio-Fahrzeugen aufzufinden. Derartige Bewegungskombinationen können notwendig sein, wenn ein Verdeckkastendeckel beim Öffnen eine bestimmte Bewegungsform ausführen muss, da bereits Teile des abzulegenden Verdecks sich im direkten Einzugsbereich des Verdeckkastendeckels befinden können.

Aus dem Fahrzeug "Lamborghini Gallardo Spider"^{®} ist eine Heckdeckelkinematik bekannt, bei der ein vorderes Ende des Verdeckkastendeckels beziehungsweise Heckdeckels auf einer Führungsebene aufliegt und einer in einem Bereich hinter der Vorderkante des Verdeckkastendeckels eingreifender Zylinder den Verdeckkastendeckel von einer geschlossenen Position in eine offene Position bewegt. Heckseitig ist der Verdeckkastendeckel des Lamborghini Gallardo Spider an einem nahezu waagrechten Hebel gelenkig gelagert, wobei die gemeinsame Lagerung, sowohl den hinteren Bereich des Verdeckkastendeckels wie auch den hinteren Bereich des Hebels darstellt.

In Richtung des Antriebszylinders weisend ist der nahezu waagrecht ausgerichtete Hebel mit zwei annähernd vertikalen Lenkern verbunden, die mit ihren freien Enden am Fahrzeugaufbau gelagert sind. Diese beiden vertikalen Lenker bilden ein Viergelenk, wobei der hintere vertikale Lenker über einen Anschlagpuffer zur Fahrzeugskarosserie die Endlage des zu öffnenden Verdeckkastendeckels begrenzt.

Aus der DE 101 40 233 A1 ist ein Cabriolet-Fahrzeug mit einem unterhalb eines Deckelteils ablegbaren Dach bekannt. Das Deckelteil ist zweigeteilt, wobei der vordere Teil durch einen Verdeckkastendeckel gebildet wird, der in seinem hinteren Bereich über ein spezielles Schwenkgelenk mit einem hinteren Deckelteil, dem eigentlichen Heckdeckel, verbunden ist. Der hintere Deckelteil dient zur Abdeckung einer Beladeöffnung des heckseitigen Stauraums. Der Trennbereich zwischen dem vorderen und dem hinteren Deckelteil ist im Wesentlichen als quer zur Fahrtrichtung verlaufende Trennfuge ausgebildet, wobei das spezielle Schwenkgelenk im Trennfugenbereich einerseits zum Öffnen des Heckdeckels dient und andererseits eine Knickfunktion beim Öffnen beider Deckelteile ausführt. Das vordere Deckelteil (Verdeckkastendeckel) wird über ein vorne liegendes lineares Führungselement während einer ersten Bewegungsphase entgegen der Fahrtrichtung bewegt. Das Führungselement gleitet auf einer linearen Führungsebene so lange, bis der maximale Knickbereich zwischen dem vorderen und dem hinteren Deckelelement erreicht ist. Dann wird das vordere Deckelteil durch das hintere Deckelteil abgestützt und in seiner Bewegung über ein weiter hinten liegendes Heckdeckelschwenkgelenk nach hinten bewegt. Als Antrieb dient ein Zylinder, wobei der Heckdeckel selber wie ein Getriebeteil wirkt.

In der DE 197 14 105 A1 wird ein umwandelbares Fahrzeugdach beschrieben, dass aus einer Schließstellung, in welcher es einen Fahrzeuginnenraum nach oben abschließt, in eine Offenstellung, in welcher es den Fahrzeuginnenraum nach oben frei gibt, bewegt. Bei geschlossenem Fahrzeugdach verschließt der Verdeckkastendeckel den für das ablegbare Dach notwendigen Durchtrittsraum und bildet in dieser Lage eine Hutablage aus. Der Verdeckkastendeckel ist mehrteilig ausgeführt, wobei zwei in Fahrtrichtung hintereinander angeordnete Flächenelemente relativ zueinander verschwenkt beziehungsweise verschoben werden können. In geschlossenem Zustand grenzt an das vordere Flächenelement je eine seitliche Abdeckung, die über zwei Lenker in eine nahezu vertikale Offenstellung geschwenkt werden kann. Sowohl in geöffneter als auch in geschlossener Stellung des Fahrzeugdachs bilden die Flächenelemente des Verdeckkastendeckels sowie die seitlichen Abdeckungen eine nahezu geschlossene Fläche über dem abgelegten Fahrzeugverdeck, wobei diese der Linienführung und Form der Karosserie entsprechend angepasst sind.

Ein Cabriolet-Fahrzeug mit einem unterhalb eines Verdeckkastendeckels ablegbaren Verdeck wird in der EP 1 132 241 A2 beschrieben. Hierbei ist im heckseitigen Bereich eines Cabrio-Fahrzeugs ein Verdeckkastendeckel vorgesehen, der über geschweifte Lenker schwenkbar im hinteren Bereich der Dachdurchtrittsöffnung gelagert ist. In Offenstellung des Verdeckkastendeckels bildet dieser mit der Fahrtrichtung einen spitzen Winkel aus, wobei zur Unterstützung der Öffnungsbewegung zumindest ein Antriebsorgan in Form eines Zylinders vorgesehen ist. Der Zylinder ist mit seinem freien Ende der Kolbenstange an einer Lenkerkinematik, bestehend aus zwei in Reihe angeordneten Lenkern, befestigt. Die Kolbenstange greift an einem ersten Lenker nahe beabstandet zu dessen karosserieseitigen Anbindungspunkt an und bewegt diesen von einer Geschlossenstellung in eine Offenstellung und wieder zurück.

An seinem freien Ende ist ein zweiter Lenker schwenkbar befestigt, der an seinem freien Ende über ein Kugelgelenk mit dem Verdeckkastendeckel verbunden ist. Diese Anordnung zweier Lenker und eines Verdeckkastendeckels bilden ein Viergelenk aus, über das der Verdeckkastendeckel geöffnet beziehungsweise geschlossen wird. Der Zylinder ist im Wesentlichen ortsfest an der Karosserie angebracht und betätigt über die beiden Lenker den Verdeckkastendeckel beispielsweise von einer geschlossenen Stellung in eine offene Stellung. Die Strecklage zwischen dem ersten und dem zweiten Lenker in Verbindung mit dem geöffneten Verdeckkastendeckel bilden einen inneren Anschlag aus, der eine weitere Öffnung des Verdeckkastendeckels verhindert.

Aus der DE 103 27 160 A1 ist ein weiteres Cabriolet-Fahrzeug mit einer Abdeckung zum Verschließen eines Aufnahmeraums, in dem ein Verdeck des Fahrzeugs angeordnet werden kann, bekannt.

Die vorliegende Erfindung beschäftigt sich mit dem Problem, für eine bewegbare Abdeckung der eingangs genannten Art eine verbesserte Ausführungsform anzugeben, die bei einfachem Aufbau eine gute Funktion aufweist und mit vergleichsweise wenigen Bauteilen einfach montierbar ist.

Dieses Problem wird erfindungsgemäß durch die Gegenstände des unabhängigen Anspruchs gelöst. Vorteilhafte Ausführungsformen sind Gegenstand der abhängigen Ansprüche.

Die Erfindung beruht auf dem allgemeinen Gedanken, dass eine bewegbare Abdeckung zum Verschließen einer Öffnung eines Fahrzeugs über wenigstens einen Antrieb und möglicherweise wenigstens einem Hebel verfügt. In diesem Fall ist die zu verschließende Öffnung der Aufnahmeraum für ein ablegbares Verdeck eines Cabrio-Fahrzeugs, wobei die Durchtrittsöffnung vollständig von der Abdeckung, auch Verdeckkastendeckel genannt, verschlossen wird. Hierzu kann die Abdeckung zweiteilig ausgebildet sein, wobei in Fahrtrichtung weisend ein vorderer Teil den Verdeckkastendeckel bildet und eine hintere Abdeckung über ein Gelenk, beispielsweise einer Gelenkleiste mit der vorderen Abdeckung verbunden ist.

Das in Fahrtrichtung weisende Ende der vorderen Abdeckung ist als Führungselement ausgebildet, welches auf einer karosserieseitigen Führung verschoben werden kann. Hierbei ist es selbstverständlich möglich, dass das Führungselement ein unterhalb des Verdeckkastendeckels angebrachtes gleitendes oder rollendes Bauteil ist. Selbstverständlich kann dieses Führungselement zusätzliche Verriegelungen aufweisen, mit denen der Verdeckkastendeckel in seiner geschlossenen Position mit dem Fahrzeugaufbau fixiert werden kann. Das Gelenk zwischen der vorderen Abdeckung und der hinteren Abdeckung verläuft nahezu quer zur Fahrtrichtung, wobei zum Aufnahmeraum weisend, an der vorderen Abdeckung ein Anschlag angebracht ist. Der Anschlag begrenzt den Winkelschwenkbereich zwischen vorderer und hinterer Abdeckung während des Öffnungsvorgangs des Verdeckkastendeckels, so dass dieser nach einer ersten linearen Bewegung (entlang der Führung des Führungselements) um ein karosserieseitiges Lager geschwenkt wird. Das karosserieseitige Lager entspricht dem hinteren Ende der hinteren Abdeckung, wobei nahe beabstandet dieser Lagerung die Kolbenstange eines hydraulischen Zylinders oder einer Gasdruckfeder angreift. Dabei hebt der Verdeckkastendeckel mit seinem Führungselement zum Erreichen der Offenstellung über den Anschlag von der Führung ab.

Eine weitere Ausführung sieht vor, dass eine weitere hintere Abdeckung fest mit dem Fahrzeugaufbau verbunden ist und somit nicht geschwenkt werden kann. In diesem Fall ist die zuvor beschriebene hintere Abdeckung als längsorientierter Hebel beziehungsweise Lenker ausgebildet, der durch eine Durchtrittsöffnung der weiteren hinteren Abdeckung nach oben schwenken kann. Selbstverständlich ist es möglich, das dieser Lenker karosserieseitig mit einer entsprechenden Abdeckung/Blende versehen ist, um ein ansprechendes Design zu erreichen.

In geöffneter Position des Verdeckkastendeckels weist dessen vorderes Ende schräg nach oben, wobei diese Position durch einen angreifenden Fahrtwind oder durch starke Windböen nach hinten geschwenkt werden kann. Dieses weitere nach hinten Schwenken entspricht einem Umklappen und somit einer unkoordinierten Bewegung. Als mögliche Abhilfe ist beispielsweise am Verdeckkastendeckel ein Rasthebel vorgesehen, der bei sich öffnendem Verdeck einen federbelasteten Nocken verdrängt, wobei dieser Nocken bei geöffnetem Verdeckkastendeckel ein weiteres Öffnen verhindern soll. Diese Fixierung oder Verriegelung ist zwischen dem Verdeckkastendeckel und der hinteren Abdeckung wirkend eingebaut.

Selbstverständlich ist es möglich, dass diese Verriegelung verschiedenartig ausgebildet sein kann. Hierzu kann anstelle eines Nockens eine entsprechende Rastvertiefung vorgesehen sein, wobei parallel dazu Kulissen angebracht werden können, in denen die Führungselemente des Rasthebels geführt werden. Durch das Verrasten, beziehungsweise Verriegelung dieses Führungselements sowie der Halterung in der Kulisse ist eine weitere unbeabsichtigte Bewegung des Verdeckkastendeckels nicht mehr möglich.

In einer weiteren Ausgestaltung weist diese Verriegelung zwischen der vorderen und der hinteren Abdeckung einen Verschlussmechanismus auf, der beispielsweise über eine eigene Antriebseinheit verfügt und diesen verschließt beziehungsweise öffnet. Auch können bei der Verriegelung Sensoren vorhanden sein, mit denen die einwandfreie Endlage der Verriegelung identifiziert werden kann. Auch kann die Verriegelung über einen eigenen Antrieb verfügen, der zum Beispiel den Rasthebel in seiner Endlage fixiert.

Die Verriegelung kann federvorgespannt sein, so dass ein eigenständiges Öffnen sicher verhindert wird. Zum Öffnen der Verriegelung kann der Fahrer diese von Hand auslösen, wobei als Übertragungsglied beispielsweise ein Bowdenzug dient. Selbstverständlich ist es möglich, dass diese Entriegelung auch elektromagnetisch und einen Schalter im Fahrgastinnenraum ausgelöst wird. Eine Kopplung dieser Auslösung mit dem Verdeckkastendeckel beziehungsweise dem Antrieb kann automatisch erfolgen.

Diese Ausführung ist eine besonders platz- und bauraumsparende Konstruktion, wobei mit sehr wenigen Bauteilen auch große Durchtrittsöffnungen abgedeckt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den durch die anhängenden Ansprüche definierten Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine bewegbare Abdeckung in geschlossener Position und mit geöffnetem Anschlag,
- Fig. 2: eine bewegbare Abdeckung in teilweise geöffneter Position und einsetzendem Anschlag,
- Fig. 3: eine bewegbare Abdeckung in geöffneter Position und mit geschlossenem Anschlag,
- Fig. 4: eine bewegbare Abdeckung in teilweise geöffneter Position und mit geöffneter Verrastung,
- Fig. 5: eine bewegbare Abdeckung in geöffneter Position und mit geschlossener Verrastung,
- Fig. 6: eine bewegbare Abdeckung in teilweise geöffneter Position und einer geöffneten Verrastung mit Aufnahme für Rastelement,
- Fig. 7: eine bewegbare Abdeckung in geöffneter Position und einer geschlossenen Verrastung mit in einer Aufnahme aufgenommenen Rastelement,

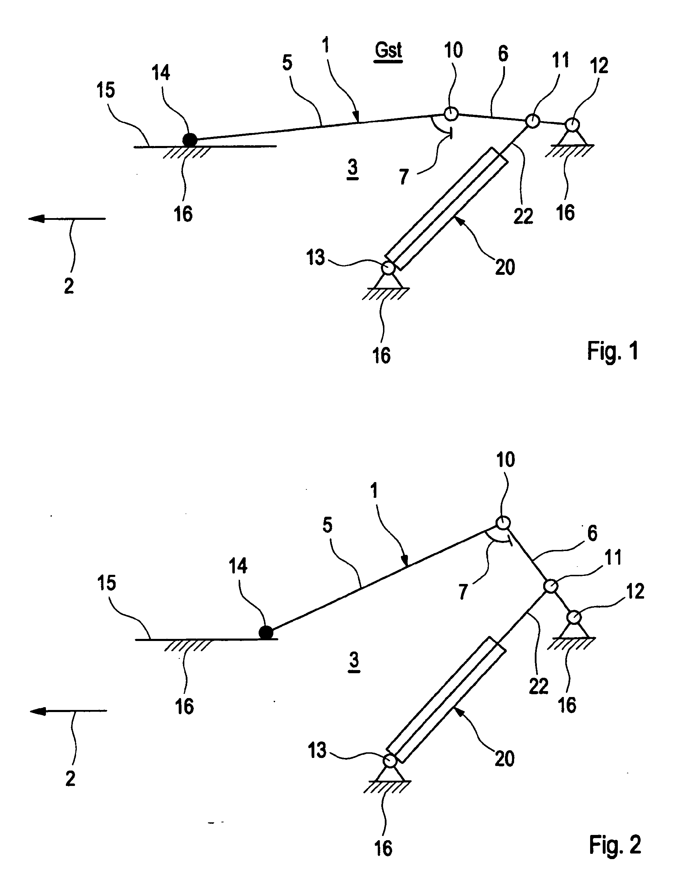

Figur 1 zeigt eine bewegbare Abdeckung 1 in geschlossener Position mit geöffnetem Anschlag 7. Hierbei besteht die Abdeckung 1 aus einer vorderen Abdeckung 5 auch Verdeckkastendeckel 5 genannt und einer hinteren Abdeckung 6. Beide Abdeckungen 5, 6 sind über ein Gelenk 10 schwenkbar miteinander verbunden. Das Gelenk 10 erstreckt sich im Wesentlichen quer zur Fahrtrichtung 2, wobei das Gelenk 10 als sogenanntes Scharniergelenk entsprechend einem Klavierband ausgelegt sein kann. An seinem vorderen Ende ist der Verdeckkastendeckel 5 mit einem Führungselement 14 ausgestattet, wobei das Führungselement 14 eine Gleitvorrichtung oder eine Abrollvorrichtung sein kann. Das Führungselement 14 ist beispielsweise am vorderen Rand unterhalb des Verdeckkastendeckels 5 an diesem angebracht.

Das Führungselement 14 liegt auf einer Führung 15 auf, wobei die Führung 15 einer linearen Führung entspricht oder auch als Kulisse ausgebildet sein kann. Die Führung 15 ist fest mit der Karosserie 16 beziehungsweise dem Fahrzeugaufbau verbunden. Im Endlagenbereich des Verdeckkastendeckels 5 kann das Führungselement 14 zusätzlich eine zur Führung 15 eingreifende Verriegelung aufweisen, mit der der Verdeckkastendeckel 5 gegenüber der Karosserie 16 verriegelbar ist.

In der geschlossenen Position der Abdeckung 1 aus Figur 1 bilden der Verdeckkastendeckel 5 und die hintere Abdeckung 6 zusammen zum Fahrzeuginnenraum weisend einen stumpfen Winkel aus. Die hintere Abdeckung 6 ist hierbei nahezu horizontal ausgerichtet, wobei dass vom Verdeckkastendeckel 5 weisende Ende des hinteren Lenkers 6 in einer Lagerung 12 an der Karosserie 16 schwenkbar befestigt ist. Das Lager 12 kann ein mittiges Lager der hinteren Abdeckung 6 oder als mehrfaches Lager entlang der Schwenkachse des Lagers 12 angeordnet sein. Zwischen Verdeckkastendeckel 5 und hinterer Abdeckung 6 ist ein Anschlag 7 vorgesehen, der in diesem Fall an der Unterkante nahe beabstandet des Gelenkes 10 am Verdeckkastendeckel 5 angebracht ist.

Im hinteren Bereich der hinteren Abdeckung 6 ist eine Kolbenstange 22 eines hydraulischen Zylinders 20 oder einer Gasdruckfeder 20 mittels des Gelenkes 11 angebracht. Ausgehend vom Lager 12 ist das Gelenk 11 etwa bei einem Drittel der in Fahrtrichtung 2 längs erstreckenden hinteren Abdeckung 6 an dieser befestigt. Der hydraulische Zylinder/Gasdruckfeder 20 ist mit seinem freien Ende mittels eines Lagers 13 an der Karosserie 16 bewegbar befestigt. Hierbei weist der hydraulische Zylinder/Gasdruckfeder 20 entgegen der Fahrtrichtung 2 schräg nach oben zur hinteren Abdeckung 6.

In einer hier nicht abgebildeten weiteren Ausführungsform entspricht die hintere Abdeckung 6 wenigstens einem Hebel 6 beziehungsweise Lenker 6 der zwischen der aufbauseitigen Lagerung 12 und dem Gelenk 10 des Endbereichs des Verdeckkastendeckels 5 bewegbar angeordnet ist. Dieser Hebel/Lenker 6 kann beispielsweise durch eine schlitzförmige Öffnung einer weiteren, feststehenden hinteren Abdeckung bei sich öffnendem Verdeckkastendeckel 5 hervor geschwenkt werden, wobei bei geschlossenem Verdeckkastendeckel 5 der Hebel/Lenker 6 eine nach oben gerichtete Abdeckung beziehungsweise Blende zum Abdecken der schlitzförmigen Öffnung aufweisen kann. Auch ist es möglich, dass der Hebel/Lenker 6 oberhalb einer hinteren Abdeckung angeordnet ist und beispielsweise durch eine finnenartige Verkleidung verdeckt wird.

Die bewegbare Abdeckung 1 in teilweise geöffneter Position mit einsetzendem Anschlag 7 ist in Figur 2 dargestellt. Hierbei ist das Führungselement 14 entlang der Führung 15 entgegen der Fahrtrichtung 2 verschoben worden. Der Verdeckkastendeckel 5 und die hintere Abdeckung 6 weisen entgegen der Figur 1 einen geringeren stumpfen Winkel auf, wobei der Verdeckkastendeckel 5 mit seinem hinteren Ende schräg nach oben weist und die hintere Abdeckung 6 mit ihrem vorderen Ende schräg nach oben in Fahrtrichtung ausgerichtet ist. Diese Position zwischen dem Verdeckkastendeckel 5 und der hinteren Abdeckung 6 entsteht dadurch, dass der hydraulische Zylinder/Gasdruckfeder 20 ausgefahren wird und die hintere Abdeckung 6 über die Kolbenstange 22 aus ihrer nahezu waagrechten Position in eine schräg nach oben vorne weisende Position geschwenkt wird. Wie in Figur 2 dargestellt, befindet sich der Anschlag 7 unmittelbar vor Kontakt mit der hinteren Abdeckung 6. Der Anschlag 7 ist in seiner Dimensionierung und Form so gestaltet, dass er einen minimalen stumpfen Winkel zwischen dem Verdeckkastendeckel 5 und der hinteren Abdeckung 6 begrenzt.

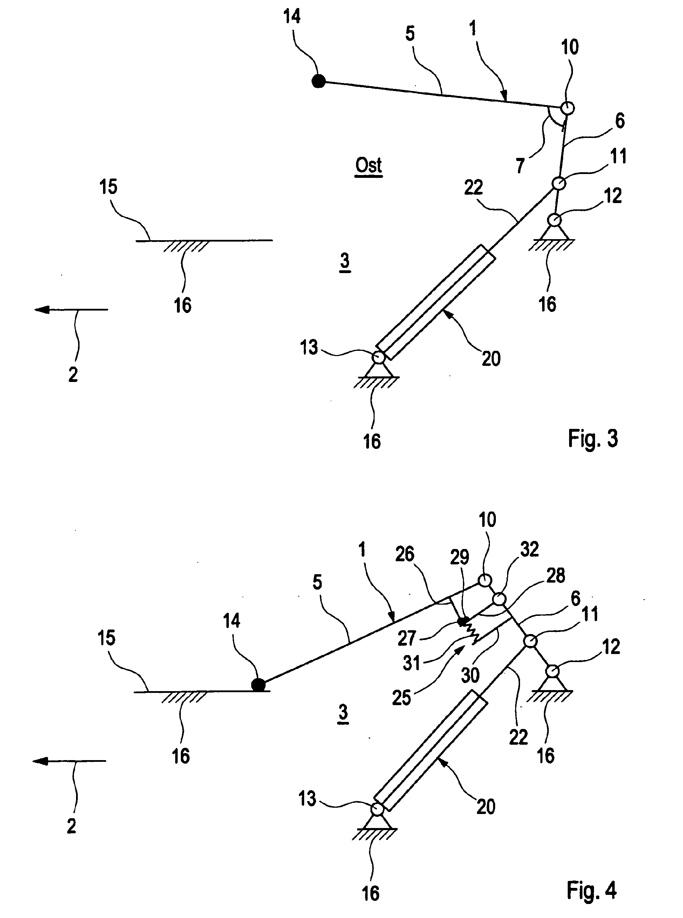

Die Figur 3 zeigt die bewegbare Abdeckung 1 in geöffneter Position und mit geschlossenem, an der hinteren Abdeckung 6 anliegenden Anschlag 7. Wie in Figur 2 bereits erwähnt, begrenzt der Anschlag 7 die relative Winkelbeweglichkeit zwischen dem Verdeckkastendeckel 5 und der hinteren Abdeckung 6. Bei weiterer ausfahrender Kolbenstange 22 des hydraulischen Zylinders/Gasdruckfeder 20 wird die hintere Abdeckung 6 nahezu in eine vertikale Position geschwenkt, wobei über den Anschlag 7 der Verdeckkastendeckel 5 mit seinem Führungselement 14 von der Führung 15 abgehoben wird. Selbstverständlich ist es denkbar, dass das Führungselement 14 beispielsweise als stiftförmiges Element in eine schlitzförmige Kulisse der Führung 15 eingreift und ab einer bestimmten Öffnungsposition aus dieser Kulisse heraus gefahren wird, so dass ein Abheben des Führungselementes 14 von der Führung 15 ermöglicht wird.

Die Kolbenstange 22 und der hydraulische Zylinder/Gasdruckfeder 20 haben in der Figur 3 ihre nahezu maximale Ausfahrposition erreicht, wobei der hydraulische Zylinder/Gasdruckfeder 20 sich nahezu in gleicher Neigungsposition, wie in den Figuren 1 und 2 dargestellt, befindet.

In Figur 4 ist die bewegbare Abdeckung 1 in teilweise geöffneter Position mit einer geöffneten Verrastung/Verriegelung 25 dargestellt. Entsprechend Figur 2 ist der Verdeckkastendeckel 5 mit seinem am vorderen Ende angebrachten Führungselement 14 auf der Führung 15 entgegen der Fahrtrichtung 2 verschoben. Nahe beabstandet zum Gelenk 10 ist am Verdeckkastendeckel 5 ein in Richtung Aufnahmeraum 3 weisend der Rasthebel 26 angebracht. An seinem dem Aufnahmeraum 3 zugewandten Ende ist der Rasthebel 26 als Rastelement mit einem Pin 27 ausgebildet. Der Pin 27 kann hierbei als ein seitlich gerichteter Stift oder als Rolle ausgebildet sein. Bei sich weiter öffnender Abdeckung 1 wird der stumpfe Winkel zwischen dem Verdeckkastendeckel 5 und der hinteren Abdeckung 6 weiter verkleinert, wobei der Rasthebel 26 mit seinem endseitigen Pin 27 über einen Nocken 29 bewegt wird.

Der Rasthebel 26 mit Pin 27 sowie der Nocken 29 bilden eine Verriegelung 25, wobei der Nocken 29 auf einem an der hinteren Abdeckung 6 schwenkbar gelagerten Hebel 28 befestigt ist. Der Hebel 28 wird mittels einer Feder 31, die sich mit ihrem freien Ende auf einer Stütze 30 abstützt, in Richtung des Rasthebels 26 gedrückt. Bei sich öffnendem Verdeckkastendeckel 5 trifft der Rasthebel 26 mit seinem endseitigen Pin 27 auf dem Hebel 28 auf und drückt diesen sowie den Nocken 29 bei sich weiter öffnendem Verdeckkastendeckel 5 in Richtung der Stütze 30, wobei der Pin 27 über den Nocken 29 hinweg gleitet.

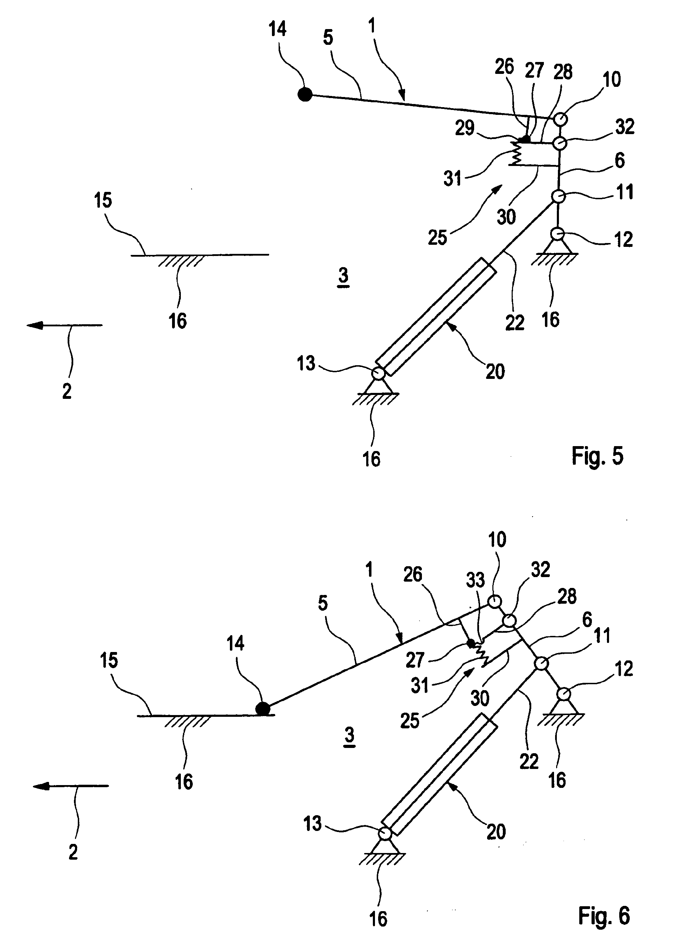

Entsprechend Figur 5 wird der Pin 27 sowie der Rasthebel 26 über den Nocken 29 und den federbeaufschlagten Hebel 28 in einer federbeaufschlagten Position gehalten. Der Hebel 28 wird hierbei über das Gelenk 32 permanent in Richtung des Rasthebels 26 gedrückt. Mittels dieser Verriegelung wird ein weiteres Schwenken des Verdeckkastendeckels 5 entgegen der Fahrtrichtung verhindert.

Eine weitere Ausführung der bewegbaren Abdeckung 1 in teilweise geöffneter Position mit einer geöffneten Verrastung 25 und einer Aufnahme 33 für das Rastelement 27 ist in Figur 6 abgebildet. Hierbei ist der Rasthebel 26 und der Pin 27 in gleicher Weise, wie in Figur 4 und 5 beschrieben ausgebildet. Zur Fixierung des Verdeckkastendeckels 5 über den Rasthebel 26 ist der Hebel 28 anstelle des Nockens 29 mit einer in Form und Kontur an den Pin 27 angepassten Aufnahme 33 beispielsweise einer Ausnehmung ausgebildet. Auch hier wird wie in den Figuren 4 und 5 der Hebel 28 mittels einer Feder 31 permanent in Richtung des Rasthebels 26 gedrückt, wobei der in der Aufnahme 33 aufgenommene Pin 27 die eigentliche Verriegelung 25 bildet.

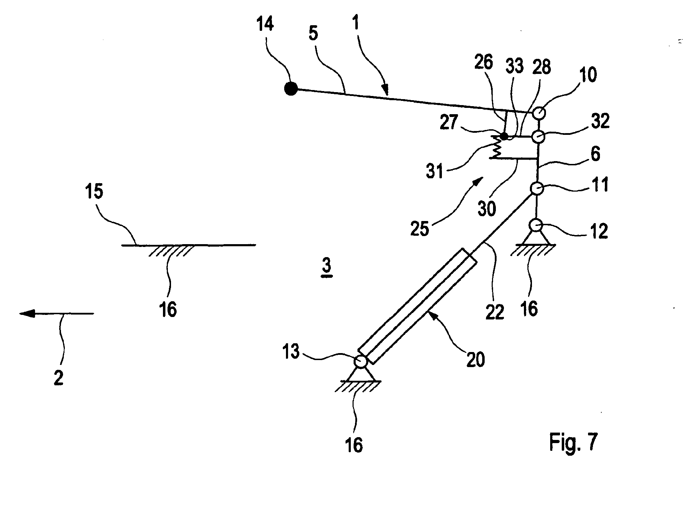

Diese verriegelte Position ist in Figur 7 dargestellt, wobei sich die bewegbare Abdeckung 1 in ihrer geöffneten Endlagenposition befindet. Diese Position wird durch die Verriegelung 25 zwischen dem Verdeckkastendeckel 5 und der hinteren Abdeckung 6 sowie der nahezu maximal ausgefahrenen Kolbenstange 22 des Zylinders/Gasdruckfeder 20 bewirkt.

Selbstverständlich kann anstelle einer Feder 31 ein Linearantrieb zur aktiven Verriegelung des Rasthebels 26 verwendet werden. Auch ist es möglich, dass der Pin 27 als Hakenverschluss ausgebildet ist, wobei ein derartiger Verschluss eine größere Anzahl von weiteren Bauteilen benötigen würde.

Der ständig unter gleichem Anpressdruck der Verriegelung 25 fixierte Verdeckkastendeckel 5 wird erfindungsgemäß mit wenigen Bauteilen von einer geschlossenen Stellung in eine Offenstellung bewegt. Zum Öffnen der Verriegelung 25 kann diese beispielsweise durch eine Bowdenzug oder einem elektrischen beziehungsweise hydraulischen/pneumatischen Steller entgegen des Rasthebels 26 bewegt werden, so dass das beim Schließvorgang wieder auf die Führung 15 auftreffende Führungselement 14 in Fahrtrichtung 2 entlang der Führung 15 gleiten kann und den Verdeckkastendeckel 5 somit in seine Schließposition bewegt.

### Bezugszeichenliste

- 1: Abdeckung
- 2: Fahrtrichtung
- 3: Aufnahmeraum

- 5: Verdeckkastendeckel
- 6: hintere Abdeckung, Hebel, Lenker
- 7: Anschlag

- 10: Gelenk
- 11: Gelenk
- 12: Lager
- 13: Lager
- 14: Führungselement
- 15: Führung
- 16: Fzg.-Aufbau, Karosserie

- 20: hyd. Zylinder, Gasdruckfeder
- 21: Zylinder
- 22: Kolbenstange

- 25: Verriegelung
- 26: Rasthebel
- 27: Pin, Rastelement
- 28: Hebel
- 29: Nocken
- 30: Abstützung, Stütze
- 31: Feder
- 32: Gelenk
- 33: Aufnahme

- Gst: Geschlossenstellung
- Ost: Offenstellung

## Patentansprüche

1. Bewegbare Abdeckung (1) zum Verschließen eines heckseitigen Aufnahmeraums (3) eines Fahrzeugs, insbesondere eines Cabriolet-Fahrzeugs, in dem ein verstellbares Fahrzeugdach des Fahrzeugs ablegbar ist,
- wobei die bewegbare Abdeckung (1) zwischen einer Geschlossenstellung (Gst) und einer Offenstellung (Ost) bewegt werden kann und aus wenigstens einem Bauteil besteht,
- wobei die bewegbare Abdeckung (1) einen Verdeckkastendeckel (5) umfasst,
- wobei die bewegbare Abdeckung (1) mittels eines hydraulischen Zylinders/Gasdruckfeder (20) bewegt werden kann,
- wobei die bewegbare Abdeckung (1) außerdem eine, in Fahrzeuglängsrichtung hintere Abdeckung (6) und ein Gelenk (10) umfasst,
- wobei der Verdeckkastendeckel (5) mittels des Gelenks (10) bewegbar an der hinteren Abdeckung (6) angebunden ist,
- wobei der Verdeckkastendeckel (5) an seinem in Fahrtrichtung (2) weisenden Ende ein Führungselement (14) aufweist und das Führungselement (14) bei sich öffnendem Verdeckkastendeckel (5) auf einer Führung (15) verschiebbar gelagert ist,
**dadurch gekennzeichnet,**
- **dass** zwischen dem Verdeckkastendeckel (5) und der hinteren Abdeckung (6) ein die Winkelbeweglichkeit zwischen dem Verdeckkastendeckel (5) und der hinteren Abdeckung (6) begrenzender Anschlag (7) vorgesehen ist,
- **dass** zum Erreichen der Offenstellung (Ost) der bewegbaren Abdeckung, der Verdeckkastendeckel (5) mit seinem Führungselement (14) über den Anschlag (7) von der Führung (15) abhebt.

2. Bewegbare Abdeckung nach Anspruch 1,
**dadurch gekennzeichnet,**
**dass** der Verdeckkastendeckel (5) und die hinteren Abdeckung (6) in Geschlossenstellung (Gst) vom Aufnahmeraum (3) ausgehend einen stumpfen Winkel bilden.

3. Bewegbare Abdeckung nach Anspruch 1 oder 2,
**dadurch gekennzeichnet,**
**dass** das Führungselement (14) einen Verriegelungsmechanismus zur Lagefixierung des Verdeckkastendeckels (5) zur Karosserie (16) aufweist.

4. Bewegbare Abdeckung nach einem derAnsprüche 1 bis 3,
**dadurch gekennzeichnet,**
**dass** der hydraulische Zylinder/Gasdruckfeder (20) zwischen der hinteren Abdeckung (6) und der Karosserie/Fahrzeugaufbau (16) angeordnet ist und die Anbindung an der hinteren Abdeckung (6) mittels eines Gelenks (11) erfolgt.

5. Bewegbare Abdeckung nach einem oder mehreren der vorangehenden Ansprüche,
**dadurch gekennzeichnet,**
**dass** der Anschlag (7) an der Unterseite des Verdeckkastendeckels (5) nahe dem Gelenk (10) zwischen Verdeckkastendeckel und hintere Abdeckung angebracht ist und sich bei öffnendem Verdeckkastendeckel (5) an der hinteren Abdeckung (6) abstützt.

6. Bewegbare Abdeckung nach Anspruch 5,
**dadurch gekennzeichnet,**
**dass** der Anschlag (7) eine Verriegelung (25) ist und durch einen Rasthebel (26) mit endseitigem Pin (27) mit einer federbeaufschlagten Aufnahme (29) korrespondiert.

7. Bewegbare Abdeckung nach Anspruch 6,
**dadurch gekennzeichnet,**
**dass** die federbeaufschlagte Aufnahme als Nocken (29) ausgeführt ist.

8. Bewegbare Abdeckung nach Anspruch 6 oder 7,
**dadurch gekennzeichnet,**
**dass** die federbeaufschlagte Aufnahme als eine in Form und Abmessung dem Pin (27) angepasste Ausnehmung in einem Hebel (28) ist.

9. Bewegbare Abdeckung nach einem der Ansprüche 1 bis 8,
**dadurch gekennzeichnet,**
**dass** die hintere Abdeckung (6) als ein Hebel/Lenker (6) ausgebildet ist, der durch eine schlitzförmige Aufnahme einer Abdeckung geschwenkt werden kann.

## Claims

1. Movable cover (1) for covering a rear receiving compartment (3) of a vehicle, in particular of a convertible vehicle, in which a displaceable vehicle roof of the vehicle can be stored,
- wherein the movable cover (1) can be moved between a closed position (Gst) and a open position (Ost) and consists of at least one component,
- wherein the movable cover (1) comprises a convertible-top-compartment lid (5),
- wherein the movable cover (1) can be moved by means of a hydraulic cylinder/gas-filled compression spring (20),
- wherein the movable cover (1) also comprises a rear cover (6) in the longitudinal direction of the vehicle and a joint (10),
- wherein the convertible-top-compartment lid (5) is connected movably to the rear cover (6) by means of the joint (10),
- wherein that end of the convertible-top-compartment lid (5) which points in the direction of travel (2) has a guide element (14), and the guide element (14) is mounted so as to be displaceable on a guide (15) as the convertible-top-compartment lid (5) opens,
**characterized**
- **in that** a stop (7) limiting the angular movability between the convertible-top-compartment lid (5) and the rear cover (6) is provided between the convertible-top-compartment lid (5) and the rear cover (6),
- **in that**, in order to reach the open position (Ost) of the movable cover, the convertible-top-compartment lid (5), by means of the guide element (14) thereof, lifts off from the guide (15) via the stop (7).

2. Movable cover according to Claim 1, **characterized in that**, in the closed position (Gst), the convertible-top-compartment lid (5) and the rear cover (6) form an obtuse angle starting from the receiving compartment (3).

3. Movable cover according to Claim 1 or 2, **characterized in that** the guide element (14) has a locking mechanism for fixing the position of the convertible-top-compartment lid (5) with respect to the bodywork (16).

4. Movable cover according to one of Claims 1 to 3, **characterized in that** the hydraulic cylinder/gas-filled compression spring (20) is arranged between the rear cover (6) and the bodywork/vehicle body (16), and the connection to the rear cover (6) is undertaken by means of a joint (11).

5. Movable cover according to one or more of the preceding claims, **characterized in that** the stop (7) is fitted on the underside of the convertible-top-compartment lid (5) in the vicinity of the joint (10) between convertible-top-compartment lid and rear cover and is supported on the rear cover (6) as the convertible-top-compartment lid (5) opens.

6. Movable cover according to Claim 5, **characterized in that** the stop (7) is a locking means (25) and, by means of a latching lever (26) with a pin (27) on the end side, corresponds with a spring-loaded receptacle (29).

7. Movable cover according to Claim 6, **characterized in that** the spring-loaded receptacle is in the form of a cam (29).

8. Movable cover according to Claim 6 or 7, **characterized in that** the spring-loaded receptacle is in the form of a recess, which is matched in shape and size to the pin (27), in a lever (28).

9. Movable cover according to one of Claims 1 to 8, **characterized in that** the rear cover (6) is designed as a lever/link (6) which can be pivoted by a slot-shaped receptacle of a cover.

## Revendications

1. Recouvrement mobile (1) pour fermer un espace de réception arrière (3) d'un véhicule, en particulier d'un cabriolet, dans lequel un toit de véhicule déplaçable du véhicule peut être rangé,
- le recouvrement mobile (1) pouvant être déplacé entre une position de fermeture (Gst) et une position d'ouverture (Ost) et étant constitué d'au moins un composant,
- le recouvrement mobile (1) comprenant un couvercle de compartiment de capote (5),
- le recouvrement mobile (1) pouvant être déplacé au moyen d'un cylindre hydraulique/ressort de compression pneumatique (20),
- le recouvrement mobile (1) comprenant en outre un recouvrement (6) arrière dans la direction longitudinale du véhicule et une articulation (10),
- le couvercle de compartiment de capote (5) étant relié au moyen de l'articulation (10) de manière mobile au recouvrement arrière (6),
- le couvercle de compartiment de capote (5) présentant, au niveau de son extrémité tournée dans la direction d'avance (2), un élément de guidage (14), et l'élément de guidage (14), lorsque le couvercle de compartiment de capote (5) s'ouvre, étant monté de manière à pouvoir coulisser sur un guide (15),
**caractérisé en ce qu'**
- une butée (7) limitant la mobilité angulaire entre le couvercle de compartiment de capote (5) et le recouvrement arrière (6) est prévue entre le couvercle de compartiment de capote (5) et le recouvrement arrière (6),
- et **en ce que** pour atteindre la position d'ouverture (Ost) du recouvrement mobile, le couvercle de compartiment de capote (5) se soulève du guide (15) avec son élément de guidage (14) par le biais de la butée (7).

2. Recouvrement mobile selon la revendication 1,
**caractérisé en ce que**
le couvercle de compartiment de capote (5) et le recouvrement arrière (6) forment, dans la position de fermeture (Gst), un angle obtus à partir de l'espace de réception (3).

3. Recouvrement mobile selon la revendication 1 ou 2,
**caractérisé en ce que**
l'élément de guidage (14) présente un mécanisme de verrouillage pour la fixation en position du couvercle de compartiment de capote (5) par rapport à la carrosserie (16).

4. Recouvrement mobile selon l'une quelconque des revendications 1 à 3,
**caractérisé en ce que**
le cylindre hydraulique/ressort de compression pneumatique (20) est disposé entre le recouvrement arrière (6) et la carrosserie/caisse du véhicule (16) et le raccordement au recouvrement arrière (6) s'effectue au moyen d'une articulation (11).

5. Recouvrement mobile selon l'une quelconque ou plusieurs des revendications précédentes,
**caractérisé en ce que**
la butée (7) est montée au niveau du côté inférieur du couvercle de compartiment de capote (5) à proximité de l'articulation (10) entre le couvercle de compartiment de capote et le recouvrement arrière et s'appuie, lorsque le couvercle de compartiment de capote (5) s'ouvre, contre le recouvrement arrière (6).

6. Recouvrement mobile selon la revendication 5,
**caractérisé en ce que**
la butée (7) est un verrouillage (25) et, par le biais d'un levier d'encliquetage (26) avec une goupille du côté de l'extrémité (27), correspond à un logement (29) sollicité par ressort.

7. Recouvrement mobile selon la revendication 6,
**caractérisé en ce que**
le logement sollicité par ressort est réalisé sous forme de came (29).

8. Recouvrement mobile selon la revendication 6 ou 7,
**caractérisé en ce que**
le logement sollicité par ressort est réalisé sous forme d'un évidement dans un levier (28) adapté à la goupille (27) en termes de forme et de dimension.

9. Recouvrement mobile selon l'une quelconque des revendications 1 à 8,
**caractérisé en ce que**
le recouvrement arrière (6) est réalisé sous forme d'un levier/bras oscillant (6), qui peut être pivoté par un logement en forme de fente d'un recouvrement.
